# EUROPEAN PATENT SPECIFICATION

(11) **EP 2 858 801 B1**
(45) Date of publication and mention of the grant of the patent: **18.05.2016**
(21) Application number: 12726117.0
(22) Date of filing: 06.06.2012
(51) Int. Cl.: B29B 9/12, B29B 9/04, B29C 43/30

(54) **SUBSTRATE-FREE DECORATIVE SURFACE COVERING**
SUBSTRATFREIE DEKORATIVE OBERFLÄCHENBESCHICHTUNG
REVÊTEMENT DE SURFACE DÉCORATIF SANS SUBSTRAT

(43) Date of publication of application: 15.04.2015
(73) Proprietor: Tarkett GDL, 9779 Lentzweiler (LU)
(72) Inventor: ALEXIS, Jörgen, S-37281 Ronneby (SE)
(74) Representative: Pronovem
(86) International application number: PCT/EP2012/060728
(87) International publication number: WO 2013/182239

(56) References cited:
- US-A- 4 396 566
- US-A- 5 627 218
- US-A1- 2010 201 025
- US-B1- 6 221 462

## Description

### Subject of the Invention

The present invention relates to a method for producing a substrate-free surface covering.

### Prior art

Generally multiple layer coverings are heterogeneous coverings, or multilayer composites, comprising generally a backing layer, usually called "substrate", and various layers made of distinctive compositions, commonly, PVC-based or polyolefin-based layers. Usually, the substrate is a non-woven or woven fabric, felt, rubber, compact or foamable resin-based layer.

Substrate-free surface coverings, also called "homogeneous" coverings, are coverings which do not comprise a backing layer or substrate. Such coverings generally comprise a layer of agglomerated polymer particles, or flakes, which may have various shapes. They may be, for example, in the form of shreds, crumbs, chips, pebbles or granules.

Substrate-free surface coverings are produced by agglomeration of polymer particles or flakes, for example by heat and pressure in a double belt press device, enabling the particles or flakes to fuse together to form a homogeneous sheet. Thus, the substrate-free surface coverings comprise a uniform composition across their thickness.

An example of a process for producing substrate-free surface coverings is described in US 4 396 566, in which thermoplastic synthetic resin particles are applied to a moving support, passed through a heating zone, compacted and welded under pressure, and then cooled simultaneously under pressure.

An other example of a process for producing substrate-free surface coverings is described in US 2010/0201025 A1.

A substrate-free surface covering may also be obtained by heat pressing thermoplastic flakes using rolling mills; However, due to friction phenomena, this calendering technique present the drawback of creating pinholes, i.e. small holes on both sides of the substrate-free surface covering, which may be intensified by the sanding step, if any, during the production process of the surface covering.

The flakes used for producing substrate-free coverings are generally coloured. Therefore, another drawback of substrate-free surface coverings is their visual aspect. Generally, their visual appearance is flat and lacking in depth. Indeed, if the agglomerated polymer flakes are obtained by cutting/shredding a sheet of a homogeneous colour, the decorative surface covering will present a substantially uniform aspect with just various shades due to the influence of the cutting/shredding devices on flake deformation and therefore on change in the colour deepness. A marbling effect can be created using flakes of slightly different colours

### Aims of the invention

The present invention provides a method for producing a substrate-free decorative surface covering which do not have the drawbacks of the prior art.

It provides in particular a method for producing a surface covering having an enhanced appearance.

### Summary of the invention

The present invention describes a method for producing a decorative substrate-free surface covering, said method comprising the steps of providing two or more types of polymer-based compositions, extruding said polymer-based composition(s) to obtain two or more types of extruded rods, jointly calendering said extruded rods together in a calendering device so as to obtain one or more type(s) of sheet(s), cutting said one or more type(s) of sheet (s) in one or more type(s) of flake(s), agglomerating said flakes to form one or more type(s) of aggregated flakes sheet(s).

The "substrate-free" surface covering is a surface covering which do not comprise a backing layer (or substrate) on which the flakes are poured onto before being agglomerated.

According to particular embodiments, the method comprises one or a suitable combination of any of the following characteristics:
- the polymer-based compositions comprises a plurality of colours or a combination of different shades of the same colour,
- the flakes comprises 45 to 55%wt of a PVC, 1.5 to 2.2 %wt of a pigment, 24 to 35 %wt of a filler, 1.5 to 2 %wt of a stabilizer and 15 to 19%wt of a plasticizer
- the method comprises the step of mixing the flakes before agglomerating the flakes to form the aggregated flakes sheet(s),
- the method comprises the step of joining at least two aggregated flakes sheets of one or more types to form a laminated product,
- in the laminated product, the aggregated flakes sheets have the same composition one to another except the concentration and/or type and/or combination of pigment or pigments,
- the method comprises the step of reducing the thickness of the aggregated flakes sheet(s),
- the method comprises the step of mechanically embossing at least one side of the aggregated flakes sheet (s) or the laminated product,
- the method comprises the step of coating with a polyurethane-based varnish layer at least one side of the aggregated flakes sheet(s) or the laminated product.

### Brief description of the figures

Figure 1 is a schematic representation of a production line of a polymer-based sheet according to one embodiment of the invention wherein three polymer-based compositions having different colours are used.

Figure 2 is a schematic representation of a production line of the surface covering according to one embodiment of the invention.

Figure 3 is a schematic representation of a production line of the surface covering according to a second embodiment of the invention.

### Detailed description of the invention

A decorative surface covering, in particular a floor covering, presents specific mechanical properties, particularly in terms of mechanical resistance, wear and indentation resistance, but also in terms of comfort, softness, sound and heat insulation.

Particularly, substrate-free decorative surface coverings (homogenous surface coverings) fulfill the recommendation of the norm ISO 10581.

The method for producing the decorative surface covering according to the present invention comprises the step of providing at least two, preferably a plurality of, types of polymer-based compositions.

The polymer-based compositions comprise a thermoplastic material or combination of thermoplastic materials. Preferably, it is PVC-based or Polyolefin-based compositions.

The polymer-based compositions further comprise a pigment.

The pigment is any suitable pigment only limited to aesthetic considerations. Preferably, it is titanium dioxide, C.I.Red 144, C.I.Blue15:1, C.I. Black 7, C.I. Green 7, C.I. Yellow 83 or C.I. Violet 23. For example, titanium dioxide is Kemira 660 from Kemira Pigments, Tiona® 168 from Millenium Chemicals or Tronox® R-FK-3 from IMCD Sweden AB, Sachtleben R 660 from Sachtleben Pigments OY, the Blue 15:1 is Irgatith Blue BCA from BASF or the PV Fast Blue from Clariant, the C.I.Red 144 is Cromophtal® Red BRNP from BASF, and C.I. Black 7 is Printex® U from Evonik.

The compositions may further comprise a filler, a stabilizer, a plasticizer, a binder, a MFI lowering agent, a fire protector, an antistatic agent, an antioxidant agent, a processing aid or a mixture thereof.

The filler is any suitable mineral or organic filler. Preferably, it is selected among hydrates, oxides, clays, carbonates, dolomite or talc or a mixture thereof.

The filler may be Myanite A16, A18 or A20 from Omya AB or chalk as Danchalk® P from Dankalk or as Reosorb 90 from Omya AB.

The stabilizer is any suitable stabilizer. Preferably, it is epoxidised soya bean oil, for example from Lankroflex 2307 from Akcros and/or a Ca-Zn stabilizer, for example from Akcros or from Barlocher GmbH.

The plasticizer is any suitable plasticizer. Preferably it is DINCH (1,2 Cyklohexandikarboxylsyra, diisononylester), for example from BASF, or Soft-N-Safe, from Danisco A/S.

The MFI lowering agent is any suitable MFI lowering agent. Preferably it is a silane-based compound or combination of silane-based compopunds. More preferably, it is vinylsilane polyethylene.

The fire protector is any suitable fire protector or combination of fire protectors. Preferably, it is silicone and Mg stearate.

The antistatic agent is any suitable antistatic agent. Preferably, it is a fatty acid ester.

The antioxidant agent is any suitable antioxidant agent. Preferably it is phenolic compound acting as a radical scavenger.

The processing aid is any suitable processing aid. Preferably, it is a polydimethylsiloxane oil.

The types of polymer-based compositions differ one to the other either by the nature and/or concentration and/or combination of thermoplastic materials and/or pigments and/or fillers and/or stabilizer and/or plasticizer and/or binder, and/or MFI lowering agent and/or fire protector and/or antistatic agent and/or antioxidant agent and/or processing aid.

In a preferred embodiment, the polymer-based compositions comprise between 47 to 55% wt of PVC and 1.5 to 2.2% wt of a pigment or combination of pigments.

In another preferred embodiment, the polymer-based compositions comprise between 67 and 72% wt of polyolefin and 1.5 to 2.2% wt of a pigment or combination of pigments.

The unit "%wt" meaning "percent in weight of the total amount of the composition.

Examples of polymer-based compositions are given in tables 1 and 2.

The PVC or polyolefin type, such as the type of stabilizer, plasticizer, filler and pigments are adapted for each application and depends on various parameters such as on the flake size, colour, transparency.

**Table 1: PVC-based compositions.**

| Sheet 1 in %wt | EX1 | EX2 | EX3 | EX4 |
|---|---|---|---|---|
| PVC | 53 | 47 | 55 | 48 |
| Plasticizer | 18 | 16 | 19 | 17 |
| Stabilizer | 2 | 2 | 2 | 2 |
| Fillers | 25 | 33 | 22 | 31 |
| Pigment | 2 | 2 | 2 | 2 |

In table 1, the PVC polymer is the one from Ineos. The filler is dolomite (Myanite A20) from Omya AB. The stabilizer is the Ca-Zn stabilizer from Akcros. The pigment is a combination of C.I.Red 144, C.I.Blue15:1 and C.I. Black 7. The plasticizer is DINCH from BASF.

**Table 2: Polyolefin-based compositions.**

| Sheet 2 in %wt | EX5 | EX6 | EX7 | EX8 |
|---|---|---|---|---|
| Polyolefin | 71.7 | 69.7 | 67.5 | 69.2 |
| Fillers | 13.7 | 14.6 | 16.5 | 15.3 |
| Pigment | 2 | 2 | 2 | 2 |
| MFI lowering agent | 8.8 | 9.7 | 10.5 | 9.5 |
| Fire protector | 1.3 | 1.4 | 1.0 | 1.4 |
| Antistatic agent | 0.4 | 0.5 | 0.4 | 0.5 |
| Antioxidant agent | 0.1 | 0.1 | 0.1 | 0.1 |
| Processing aid | 2 | 2 | 2 | 2 |

In table 2, the polyolefin is a mixture of polypropylene, Embryon Hg245 FB from Borealis and of a co-polymer of ethylene and octen, Affinity EG 8100 from Dow chemicals. The filler is a high molecular polyethylene, Stamylan UH 210 from DSM. The MFI lowering agent is Visico LE 4421 and Visico LE 4438 from Borealis. The Fire protector is a mixture of silicone SFR100 from Tributex and Mg-stearate from Bärlocher. The Antistatic agent is Hostastat FE2 from Clariant. The Antioxidant agent is Hostanox O 10 from clariant. The Processing aid is Rhodorsil V47 30.000 from Rhodia.

The polymer-based compositions are extruded to form at least two types of extruded rod, preferably plurality types of extruded rods, which is (are) then calendered together to obtain one or more type(s) of the polymer-based sheet or sheets.

Different types of extruded rods, and thus different types of polymer-based sheets, may be obtained from the different number and/or types of polymer-based compositions used. However, it has to be understood, that there is no limitation in the number of types of rods or polymer-based sheets which may be obtained.

The types of rods or polymer-based sheets are different one to another from their composition and/or their colour and/or combination of colours or shades of the same colour.

The colour or colours are different in hue, colorfulness, chroma, saturation, lightness, brightness or a combination thereof.

The different colours are any suitable colour. They may be obtained by using in the polymer-based composition or compositions any suitable pigment or combination of pigments.

In the plurality polymer-based sheets embodiment, the polymer-based sheets may have the same composition one to another except the concentration and/or type and/or combination of pigment or pigments.

For example, one type of rod has a composition with a single colour, another type has the same composition but with one pattern of different colours, or shades of the same colour, and another type has the same composition but with another pattern of different colours or shades of the same colour, and so on.

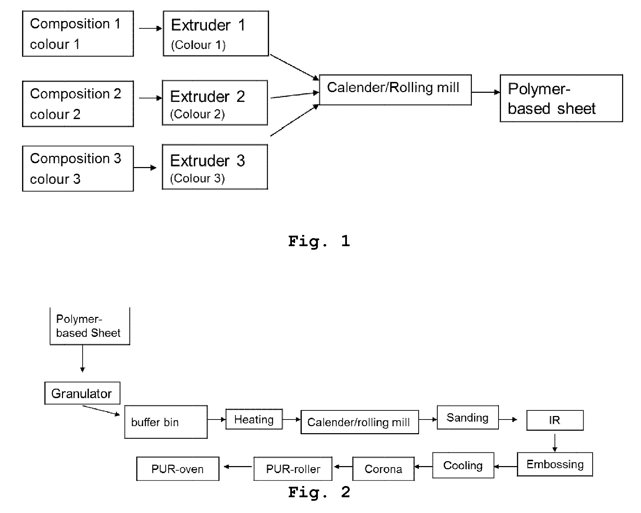

In the preferred embodiment presented in figure 1, the schematic representation of the production line shows three extruders, fed with three types of compositions having three different colours, one extruder per colour, to produce at least one type of polymer-based sheet. The three extruded products are provided at the same time to a rolling mill, or calendering device, to form one polymer-based sheet. However, it has to be understood that the production line can comprises more than three extruders, for example four, five or dozens of extruders, fed with compositions having different colours, to obtain one type or several types of polymer-based sheets.

In the plurality polymer-based sheets embodiment, each sheet may comprise a single colour or a combination of a plurality of different colours, or a combination of different shades of the same colour, each sheets having a colour pattern different one from the other.

Preferably, the polymer-based sheet or sheets has or have a thickness comprised between 1.90 and 2.13 mm. More preferably the thickness is around 2.1 ± 0.05 mm.

In the plurality of polymer-based sheets embodiment, each sheet has a thickness equal or equivalent from one to another.

The at least one polymer-based sheet, or plurality of polymer-based sheets, is or are cut into flakes using any suitable cutting means in its general sense, preferably by using a granulator or a shredder.

Producing the flakes from the polymer-based sheet and not from the rods has the advantage of allowing getting a wider range of colours or colouring effects. Furthermore, besides being an easier way to produce flakes, it allows controlling, and fine tuning, their shape, especially their thickness by controlling the thickness of the polymer-based sheet.

The flakes have different shapes or sizes. They may be in the form of shreds, crumbs, chips, pebbles, granules or a mix thereof. They may have any suitable size and thickness.

Several types of flakes may thus be obtained. The types are different one to another from their composition and/or shape and/or size and/or colour and/or combination of colours or shades of the same colour. There is no limitation in the number of types of flakes which may be obtained.

The flakes thus obtained are then stocked in a buffer bin and before optionally being mixed together. For the use of polymer-based flakes from different colours a plurality of bins can be used.

In terms of colour combination all possibilities are open and the bins are used to create the right mix of flakes leading to a sheet of aggregated or agglomerated flakes.

The flakes are then agglomerated together, preferably under heat and pressure, to form one or more types of aggregated flakes sheets.

The aggregated flakes sheet is obtained using any suitable device, preferably a heat press device, no bottom layer, or substrate, being used.

The aggregated flakes sheet is preferably obtained at a temperature comprised between 160 and 200°C, more preferably between 180 and 190°C, and under a pressure of between 30 and 50 bars, more preferably at 40 bars.

Preferably, the flakes are pre-heating at a temperature comprised between 125 and 150 °C, more preferably, between 130 and 135°C, before being heat pressed them together.

Preferably, the aggregated flakes sheet has a thickness comprised between 0.9mm to 1.3mm. The thickness may be obtained by sanding either one or both sides of the aggregated flakes sheet, using any suitable device.

In a preferred embodiment, the aggregated flakes sheet is the decorative substrate-free surface covering according to the invention, but it may be also submitted to further process steps to obtain a more elaborated substrate-free surface covering (figure 2).

In another embodiment the aggregated flakes sheet is an intermediary product, the decorative substrate-free surface covering according to the invention comprising at least two, more preferably a plurality of distinctive aggregated flakes sheets joined together.

The method according to the invention comprises then a step of joining at least two agglomerated flakes sheets, having the same flakes composition, having the same colour pattern or having a different colour pattern, having the same or a different thickness, to form a laminated product.

The agglomerated flakes sheets are bound together, preferably by lamination at a temperature comprised between 160 and 170°C under a pressure comprised between 3 and 8 bars, preferably at around 5 bars. However, the two agglomerated flakes sheets may be joined together using any suitable means, such as for example a glue or hot melt adhesive.

In such embodiment, the distinctive agglomerated polymer-based sheets have each a thickness of at least 1mm, more preferably at least 2mm.

The thickness of the laminated product is of at least 2mm, preferably least 3mm, more preferably at least 5mm.

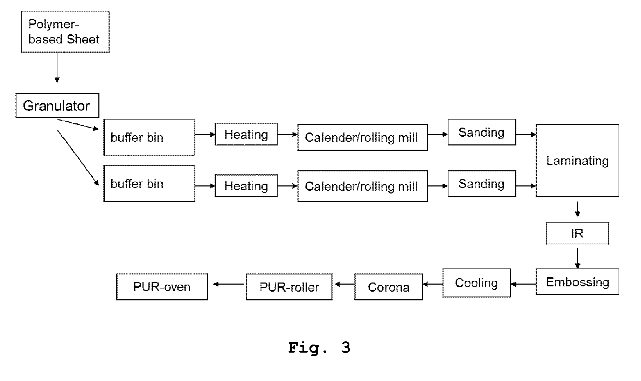

As schematically represented in figure 3, the production line may comprise two lines allowing producing one type of agglomerated flakes sheets, which are substrate-free intermediate products, having the same composition and colour or same combination of colours, or combination of different shades of colours, from one to another, the flakes being produced from a single type of polymer-based sheet produced from a plurality of rods or from a single type of rod. However, in this embodiment the flakes may be also produced from a plurality of polymer-based sheets of different types produced from a plurality of rods of different types.

In another preferred embodiment, two types of agglomerated flakes sheets are produced having a different colour, or a different combination of different colours, or different combination of different shades of the same colour, one to another, the agglomerated flakes sheets being produced from a single type or a plurality types of polymer-based sheets produced from a single rode type or a plurality of rod types.

Once the sheets of agglomerated flakes are available and ready to be joined to each other, all colour combinations are possible and depend only on aesthetical considerations.

Even if the substrate free surface covering according to one embodiment of the invention comprises two or more agglomerated flakes sheets having the same composition, except the colour in some embodiments, the laminated product is still an homogenous surface covering as it comprises a uniform composition across its thickness. Furthermore, the laminated product is still a substrate-free surface covering as it does not comprise a backing layer or a substrate onto which the flakes are poured down before agglomeration or a backing layer or a substrate commonly used in multiple layers coverings.

The agglomerated flakes sheet, or the laminated product, obtained may be submitted to further process steps to obtain a more elaborated substrate-free surface covering (figures 2 and 3).

The method according to the invention may comprise an embossing step, using any suitable embossing device, the embossing obtained having preferably a depth comprised between 300 and 400 µm.

Before the embossing step, agglomerated flakes sheet, or the laminated product, may preferably being heated at a temperature of 140 to 180°C, preferably around 150°C, using for example an Infra-Red heating device.

The embossing is performed at a temperature comprised between 150 and 160°C at a pressure of around 3.2 bars.

Preferably, the top side of the agglomerated flakes sheet, or the laminated product, with or without embossment, is then coated with a varnish layer, preferably a polyurethane-based layer, and more preferably UV-curable polyurethane. This top coating may comprise a PUR-dispersion, a PUR-solution, a two-component PUR, a PUR acrylate, or a mixture thereof. Preferably, the top coating has a thickness between 0.5 µm to 100 µm, and is applied by any suitable technique, but preferably by roller coating or spraying.

Preferably, the top coating is applied at a temperature of around 23°C, then dried in an oven at a temperature comprised between 70 and 80°C, before being cured, for example by UV-curing for UV curable top coating.

Preferably, before the top coating step, the top side of the agglomerated flakes sheet, or the laminated product, with or without embossment, may be subject to a corona treatment to improve the adhesion of the top coating.

Preferably, the agglomerated flakes sheet or the laminated product, with or without top coating, is then cut into strips or tiles.

The substrate free surface covering according to the invention, being an agglomerated flakes sheet or a laminated product, presents the advantage of reducing or suppressing small holes which may be produced on the top and/or bottom surface of the laminated product using calendering devices, i.e. rolling mills.

Therefore, the substrate-free surface covering of the present invention combines enhanced mechanical properties of such substrate-free surface covering with a new esthetical aspect.

In one embodiment, the substrate-free surface covering of the present invention emulates esthetical aspect of wood by using two intermediate products.

The wood aspect is obtained by producing flakes form a light brown sheet, from a medium brown sheet and a dark brown sheet, by heat pressing said flakes to form two intermediate products comprising both the same flakes and by embossing the upper surface of the surface covering thus obtained to create embossments of 300 µm of depth.

Preferably, the substrate-free surface covering according to the invention is a floor covering.

### Example

On a first step, three polymer-based compositions having three different colours (white, blue and red) are extruded using three extruders before being at least partially mixed and transformed using rolling mills into a sheet having a thickness of around 2.1 mm.

The three polymer-based compositions comprise 53%wt PVC polymer from Ineos, 18% wt DINCH from BASF as plasticizer, 1%wt of CaZn stabilizer from Akcros, and 1%wt of epoxidised soya bean oil (Lankroflex 2307 from Akcros)and 25%wt dolomite (Myanite A20) from Omya AB as filler.

The first polymer-based composition comprises 2%wt of titanium dioxide (Kemira 660) from Kemira Pigments, the second 2%wt of C.I. Blue 15:1 (Irgatith Blue BCA) from Ciba, and the third 2%wt of C.I.Red 144 is Cromophtal® Red BRNP from BASF.

The polymer-based sheet is then granulated or shredded using a granulator or a shredder to form flakes having a size of around 8x6mm. The flakes thus obtained are mixed together before being heated at 135°C and pressed at a pressure of 30 bars between two sets of two rolling mills at a temperature of 190°C to form two agglomerated flakes sheets.

Both sides of the two agglomerated flakes sheets are sanded before being laminated together at a temperature of 165°C and a pressure of 5 bars to form the substrate-free surface covering.

The upper side of the laminated product is then heated with an IR device at a temperature of 150°C before being embossed at a temperature of 160°C at a pressure of 3.2 bars.

The upper side, being embossed, is then submitted to a corona treatment before a PUR coating (Aqualux 18000) is applied at ambient temperature. The PUR is then cured by UV.

## Claims

1. A method for producing a decorative substrate-free surface covering, said method comprising the steps of:
- providing two or more types of polymer-based compositions,
- extruding said polymer-based composition(s) to obtain two or more types of extruded rods,
- jointly calendering said extruded rods together in a calendering device so as to obtain one or more type(s) of sheet(s),
- cutting said one or more type(s) of sheet(s) in one or more type(s) of flake(s),
- agglomerating said flakes to form one or more type(s) of aggregated flakes sheet(s).

2. The method according to claim 1, wherein the polymer-based compositions comprises a plurality of colours or a combination of different shades of the same colour.

3. The method according to claims 1 or 2, wherein the flakes comprises 45 to 55%wt of a PVC, 1.5 to 2.2 %wt of a pigment, 24 to 35 %wt of a filler, 1.5 to 2 %wt of a stabilizer and 15 to 19%wt of a plasticizer.

4. The method according to any of the preceding claims, comprising a step of mixing the flakes before agglomerating said flakes to form the aggregated flakes sheet(s).

5. The method according to any of the preceding claims, comprising a step of joining at least two aggregated flakes sheets of one or more types to form a laminated product.

6. The method according to claim 5, wherein the aggregated flakes sheets have the same composition one to another except the concentration and/or type and/or combination of pigment or pigments.

7. The method according to any of the preceding claims, comprising a step of reducing the thickness of the aggregated flakes sheet(s).

8. The method according to any of the preceding claims, comprising a step of mechanically embossing at least one side of the aggregated flakes sheet(s) or the laminated product.

9. The method according to any of the preceding claims, comprising a step of coating with a polyurethane-based varnish layer at least one side of the aggregated flakes sheet(s) or the laminated product.

## Patentansprüche

1. Verfahren für die Herstellung einer dekorativen, substratfreien Oberflächenbeschichtung, wobei das Verfahren die Schritte umfasst des:
- Bereitstellens von zwei oder mehr Typen von Zusammensetzungen auf Polymerbasis,
- Extrudierens der Zusammensetzung(en) auf Polymerbasis, um zwei oder mehr Typen von extrudierten Stäben zu erhalten,
- gemeinsamen Kalandrierens der extrudierten Stäbe zusammen in einer Kalandriervorrichtung, um einen oder mehrere Typ(en) von Platte(n) zu erhalten,
- Schneidens des einen Typs oder der mehreren Typen von Platte(n) in einen oder mehrere Typ(en) von Flocke(n),
- Agglomerierens der Flocken, um einen oder mehrere Typ(en) von Platte(n) aggregierter Flocken zu bilden.

2. Verfahren nach Anspruch 1, wobei die Zusammensetzungen auf Polymerbasis mehrere Farben oder eine Kombination von verschiedenen Schattierungen derselben Farbe umfassen.

3. Verfahren nach den Ansprüchen 1 oder 2, wobei die Flocken 45 bis 55 Gew.-% eines PVC, 1,5 bis 2,2 Gew.-% eines Pigments, 24 bis 35 Gew.-% eines Füllstoffs, 1,5 bis 2 Gew.-% eines Stabilisators und 15 bis 19 Gew.-% eines Weichmachers umfassen.

4. Verfahren nach einem der vorhergehenden Ansprüche, umfassend einen Schritt des Mischens der Flocken vor dem Agglomerieren der Flocken unter Bildung der Platte(n) aggregierter Flocken.

5. Verfahren nach einem der vorhergehenden Ansprüche, umfassend einen Schritt des Verbindens von mindestens zwei Platten aggregierter Flocken eines oder mehrerer Typen, um ein laminiertes Produkt zu bilden.

6. Verfahren nach Anspruch 5, wobei die Platten aggregierter Flocken dieselbe Zusammensetzung von einer zur anderen mit Ausnahme der Konzentration und/oder des Typs und/oder der Kombination von Pigment oder Pigmenten aufweisen.

7. Verfahren nach einem der vorhergehenden Ansprüche, umfassend einen Schritt des Reduzierens der Dicke der Platte(n) aggregierter Flocken.

8. Verfahren nach einem der vorhergehenden Ansprüche, umfassend einen Schritt des mechanischen Prägens mindestens einer Seite der Platte(n) aggregierter Flocken oder des laminierten Produkts.

9. Verfahren nach einem der vorhergehenden Ansprüche, umfassend einen Schritt des Beschichtens mindestens einer Seite der Platt(en) aggregierter Flocken oder des laminierten Produkts mit einer Lackschicht auf Polyurethanbasis.

## Revendications

1. Procédé de production d'un revêtement de surface décoratif sans substrat, ledit procédé comprenant les étapes consistant à :
- se procurer au moins deux types de compositions à base de polymère,
- extruder ladite/lesdites composition(s) à base de polymère pour obtenir au moins deux types de barres extrudées,
- calandrer ensemble lesdites barres extrudées dans un dispositif de calandrage de manière à obtenir un ou plusieurs type(s) de feuille(s),
- couper ledit ou lesdits type(s) de feuille(s) en un ou plusieurs type(s) de lamelle(s),
- agglomérer lesdites lamelles pour former un ou plusieurs type(s) de feuille(s) de lamelles agglomérées.

2. Procédé selon la revendication 1, dans lequel les compositions à base de polymère comprennent une pluralité de couleurs ou une combinaison de différentes nuances de la même couleur.

3. Procédé selon la revendication 1 ou 2, dans lequel les lamelles comprennent 45 à 55 % en poids d'un PVC, 1,5 à 2,2 % en poids d'un pigment, 24 à 35 % en poids d'une charge, 1,5 à 2 % en poids d'un stabilisant et 15 à 19 % en poids d'un plastifiant.

4. Procédé selon l'une quelconque des revendications précédentes, comprenant une étape de mélange des lamelles avant l'agglomération desdites lamelles pour former la/les feuille(s) de lamelles agglomérées.

5. Procédé selon l'une quelconque des revendications précédentes, comprenant une étape d'assemblage d'au moins deux feuilles de lamelles agglomérées d'un ou plusieurs types pour former un produit stratifié.

6. Procédé selon la revendication 5, dans lequel les feuilles de lamelles agglomérées ont la même composition à l'exception de la concentration et/ou du type et/ou de la combinaison de pigment ou pigments.

7. Procédé selon l'une quelconque des revendications précédentes, comprenant une étape de réduction de l'épaisseur de la/les feuille(s) de lamelles agglomérées.

8. Procédé selon l'une quelconque des revendications précédentes, comprenant une étape de gaufrage mécanique d'au moins un côté de la/les feuille(s) de lamelles agglomérées ou du produit stratifié.

9. Procédé selon l'une quelconque des revendications précédentes, comprenant une étape de revêtement avec une couche de vernis à base de polyuréthane d'au moins un côté de la/les feuille(s) de lamelles agglomérées ou du produit stratifié.
